# FASCICULE DE BREVET EUROPEEN

(11) **EP 2 696 122 B1**
(45) Date de publication et mention de la délivrance du brevet: **27.05.2015**
(21) Numéro de dépôt: 13179592.4
(22) Date de dépôt: 07.08.2013
(51) Int. Cl.: F16K 37/00

(54) **Dispositif de détection de position de tiroir de distributeur pneumatique**
Vorrichtung zur Positionserkennung des Steuerschiebers eines pneumatischen Wegeventils
Device for detecting the position of a slide valve of a pneumatic valve

(30) Priorité: 07.08.2012 FR 1257673
(43) Date de publication de la demande: 12.02.2014
(73) Titulaire: Asco Joucomatic SA, 92500 Rueil Malmaison (FR)
(72) Inventeur: Hubert, Daniel, 93150 Le Blanc Mesnil (FR); AMBEKAR, Sanjeev, Pune 33 Chinchwad (IN); Joshi, Bhaskar, Pune-411041 Wadgaon Budruk (IN); Chopade, Manoj, 413411 Barshi (IN)
(74) Mandataire: Nony

(56) Documents cités:
- EP-A1- 0 844 425
- EP-A1- 1 985 902
- DE-A1- 10 304 608
- DE-A1-102008 059 594
- FR-A- 1 453 728

## Description

L'invention concerne un dispositif de détection de la position d'un tiroir d'un distributeur pneumatique ou électropneumatique.

Afin d'augmenter la sûreté de fonctionnement des automatismes pneumatiques et/ou électropneumatiques et par conséquent mieux assurer la sécurité des machines c'est à dire la prise en compte de la sécurité des personnes et des biens sur défaillances des systèmes. On se propose de détecter la non prise en compte d'un signal de commande de commutation de distributeurs électropneumatiques ou pneumatiques par la détection et surveillance de la position du tiroir obturateur.

Les brevets DE 2011 6202, EP 1 186 814 et EP 0 844 425 décrivent des équipements additionnels intégrés aux distributeurs pneumatiques ou électropneumatiques traditionnels et tendant à vérifier la position du tiroir du distributeur soit par des moyens optiques, soit par des moyens magnétiques en minimisant l'encombrement global mais interdisant la mise à niveau d'installation existante sans remplacement complet du dispositif de distribution pneumatique.

Le brevet DE 10 2008 05 9594 aborde la notion d'une embase additionnelle de mesure qui permet de déterminer la position du distributeur, toujours par des moyens optiques, de façon à assurer la mise à niveau des installations existantes. Toutefois cette solution exige des moyens électroniques d'alimentation électrique régulée et la génération et la transmission de signaux codés ou analogiques.

DE 10 304608 divulgue un distributeur pneumatique comprenant des moyens de détection de la position d'un tiroir, comprenant des détecteurs digiformes répartis le long du tiroir. Les moyens de détection font partie du corps du distributeur et nécessitent que le tiroir ait une forme spécifique afin de pouvoir interagir avec les détecteurs digiformes.

FR 1 453 728 concerne une soupape de sécurité comprenant des éléments conducteurs pouvant fermer zéro, un ou deux circuits selon la position de la soupape.

EP 1 985 902 divulgue un indicateur de position pour un dispositif pneumatique admettant différentes configurations, pouvant être installé à la place d'une butée arrière.

L'invention a pour but, notamment, de proposer un distributeur pneumatique ou électropneumatique comprenant un dispositif de détection de la position du tiroir dudit distributeur pneumatique ou électropneumatique qui soit d'un encombrement limité et soit adaptable à une installation existante sans nécessiter d'équipement électronique particulier.

Selon l'invention un dispositif de détection de la position d'un tiroir d'un distributeur pneumatique ou électropneumatique est caractérisé en ce qu'il comprend un boitier apte à être installé entre le corps et au moins un embout de pilotage dudit distributeur pneumatique ou électropneumatique comportant un tiroir et en ce qu'il comporte des moyens de détection de la position du tiroir par continuité électrique.

Le boîtier s'interpose entre le corps et l'embout de pilotage, selon le même axe le long duquel le tiroir se déplace.

Le boîtier peut être retenu entre le corps et l'embout de pilotage par différents moyens, notamment pas des vis traversant complètement le boîtier, éventuellement en prise avec des écrous.

Le corps guide le déplacement du tiroir le long de son axe

L'embout de pilotage peut comprendre une électrovanne pouvant provoquer sur commande l'entrée d'un fluide pressurisé de façon à commander le mouvement d'un piston solidaire du tiroir.. Le tiroir peut notamment être animé d'un mouvement de translation par l'augmentation de la pression dans une chambre située entre l'électrovanne et le piston, dans l'embout de pilotage. Le boîtier est traversé par une portion du tiroir connectée au piston.

Le boîtier ne peut pas servir de butée au déplacement du tiroir selon son axe. Le boîtier peut comprendre des joints afin d'assurer l'étanchéité des connexions entre le boîtier, le corps, et l'embout de pilotage. Les éléments conducteurs secondaires peuvent ne pas être en contact direct avec le tiroir mais avec un élément conducteur primaire porté par le piston solidaire du tiroir. Le boîtier peut être compris entre le piston et la partie du tiroir qui coopère avec le logement dans lequel le tiroir évolue.

Avantageusement les moyens de détection comprennent un élément conducteur primaire solidaire du tiroir et deux éléments conducteurs secondaires fixes tels que la continuité électrique est obtenue par la mise en contact de l'élément conducteur primaire avec les deux éléments conducteurs secondaires. Un tel contact peut permettre aux éléments conducteurs secondaires d'être comprimés axialement par l'élément conducteur primaire, un tel contact conduisant à une déformation des éléments conducteurs secondaires le long de l'axe longitudinal du tiroir.

L'élément conducteur primaire peut être un disque conducteur ou une lame conductrice.

Les éléments conducteurs secondaires peuvent être réalisés sous forme d'éléments flexibles conducteurs.

L'élément conducteur primaire peut être fixé sur un piston solidaire du tiroir.

De préférence, cet élément conducteur primaire est un disque métallique plan perpendiculairement à l'axe longitudinal du tiroir.

Avantageusement le boitier est étanche par rapport au milieu extérieur et au flux d'air contrôlé par le distributeur pneumatique ou électropneumatique.

D'autres caractéristiques et avantages de l'invention apparaîtront dans la description qui suit d'un mode de réalisation préféré avec référence aux dessins annexés mais qui n'a aucun caractère limitatif.

Sur ces dessins :
Fig. 1 est une vue en coupe longitudinale d'un dispositif selon l'invention intercalé entre un embout de pilotage et un corps de distribution.
Fig. 2 est une vue en perspective éclaté du dispositif de Fig. 1 intercalé entre un embout de pilotage et un corps de distribution.
Fig. 3 est une vue schématique en élévation latérale d'un dispositif selon l'invention, la présence d'un tiroir n'étant pas détectée.
Fig. 4 est une vue schématique en élévation latérale d'un dispositif selon l'invention, la présence d'un tiroir étant détectée et,
Fig. 5 est une vue schématique en perspective de la situation illustrée Fig. 4.

La présente invention reprend les notions de détection de position et de mise à niveau d'installation existante mais l'originalité de la solution proposée réside d'une part en ce que le dispositif modulaire s'intègre entre le corps du distributeur et son embout de pilotage et que d'autre part il ne nécessite pas de moyen électronique particulier, puisque la détection de position est générée par l'établissement d'un simple contact de pièces mécaniques permettant le passage d'un courant électrique.

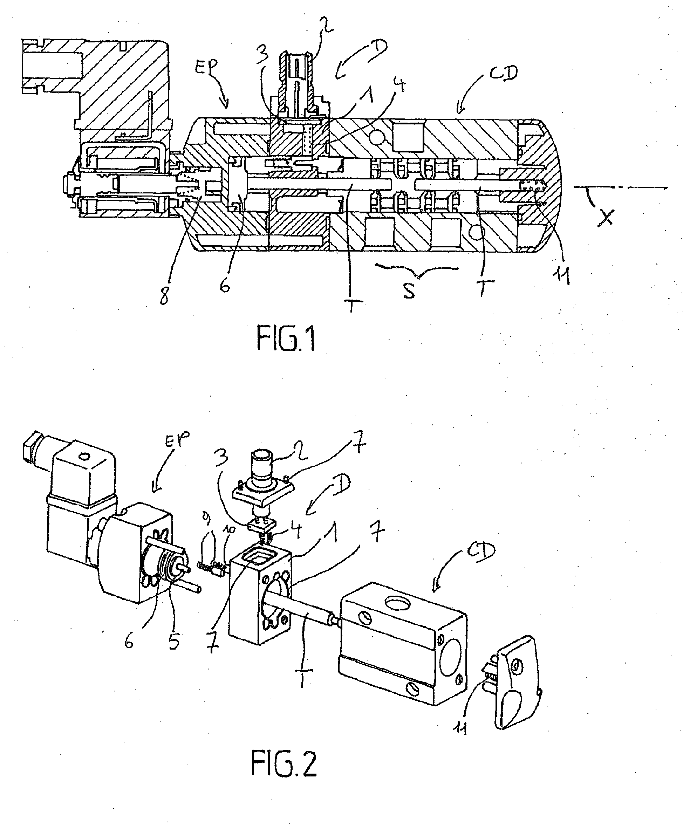

Fig. 1 et 2, on peut voir que le dispositif D selon l'invention appelé module de détection de position comprend un corps intercalaire 1 s'intégrant entre le corps de distribution pneumatique CD et l'embout de pilotage EP du distributeur.

Le dispositif D est localisé selon l'axe X le long duquel le tiroir peut se déplacer, entre l'embout de pilotage EP et le corps CD, et en particulier entre l'embout de pilotage EP et une partie S du tiroir apte à coopérer avec le logement dans lequel évolue le tiroir T.

Le module comprend également en partie supérieure un connecteur électrique 2 et sa bride de fixation, un circuit imprimé de connexion 3 disposé sous le connecteur 2, un ensemble de deux ressorts cuivre béryllium 4 associé à des broches de contact fixées sur le circuit 3.

Un disque en cuivre doré 5 est serti sur le piston 6 d'actionnement du tiroir. Le piston 6 est lui-même solidarisé sur le tiroir T par frettage. Un ensemble de joints 7 (Fig. 2) assure l'étanchéité du module.

Le fonctionnement du dispositif s'effectue comme suit.

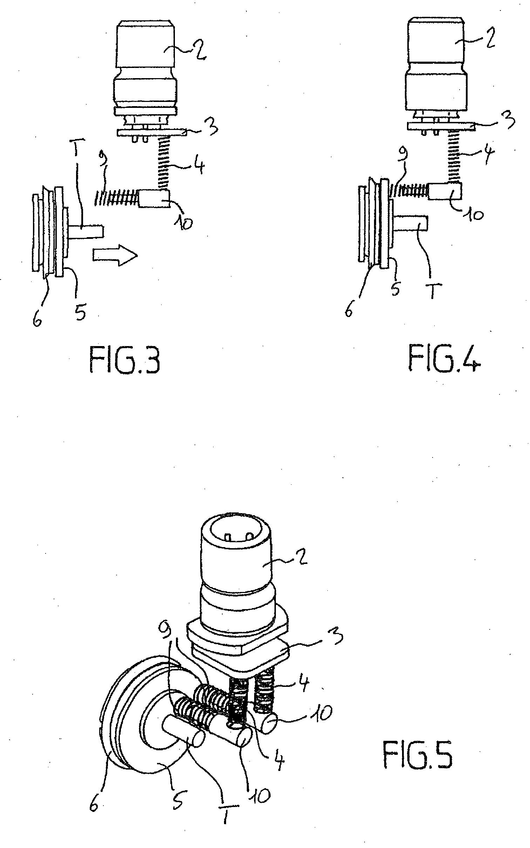

Lorsque l'ordre de basculement est donné, le pilote électropneumatique ou pneumatique permet l'admission d'air dans la chambre 8. Sous l'effet de la pression l'ensemble mobile piston 6 et tiroir T est alors poussé dans une autre position. En fin de course de basculement, le disque doré 5 serti sur le piston 6 entre en contact avec deux ressorts 9, reliés aux ressorts 4 par des renvois d'angle 10, établissant alors une continuité électrique (Fig. 4 et 5). Cette continuité électrique est transmise au travers du circuit imprimé 3 et du connecteur 2 vers un circuit externe au système. Les ressorts 9 sont compressés par le disque 5.

L'information concernant la position du tiroir est ainsi disponible sous la forme d'un signal tout ou rien et ne nécessite pas l'utilisation de moyens électroniques complexes ni le traitement de signaux codés.

A disparition de l'ordre de basculement, l'air comprimé présent dans la chambre du piston 8 est évacué par une mise à l'échappement. Du fait de la baisse de la pression, le ressort de rappel 11 du tiroir T renvoie l'ensemble mobile dans sa position de repos. La continuité électrique disparait lorsque le disque en cuivre 5 n'est plus en contact avec les deux ressorts de contact 9 (Fig. 3).

Ce module de détection peut être avantageusement intégré dans un système de distribution pneumatique ou électropneumatique comprenant deux embouts de pilotage. Le second pilote remplace alors le ressort de rappel du tiroir.

## Revendications

1. Distributeur pneumatique ou électro pneumatique, comprenant au moins un embout de pilotage (EP) et un tiroir (T) pouvant se déplacer selon un axe (X) dans un corps (CD) dudit distributeur, et un dispositif (D) de détection de la position dudit tiroir, ledit dispositif (D) étant situé entre l'embout de pilotage (EP) et le corps (CD), le long dudit axe longitudinal (X) et charactérisé en ce que ledit dispositif de détection (D) comprend un boitier (1) apte à être installé entre le corps (CD) et ledit au moins un embout de pilotage (EP) et en ce qu'il comporte des moyens de détection de la position du tiroir (T) par continuité électrique.

2. Distributeur selon la revendication 1, **caractérisé en ce que** les moyens de détection comprennent un élément conducteur primaire (5) solidaire du tiroir (T) et deux éléments conducteurs secondaires fixes (4, 9, 10) tels que la continuité électrique est obtenue par la mise en contact de l'élément conducteur primaire (5) avec les deux éléments conducteurs secondaires (4, 9, 10).

3. Distributeur selon la revendication 2, **caractérisé en ce que** l'élément conducteur primaire est un disque conducteur (5) ou une lame conductrice.

4. Distributeur selon la revendication 2 ou 3, **caractérisé en ce que** les éléments conducteurs secondaires (4, 9) sont réalisés sous forme d'éléments flexibles conducteurs.

5. Distributeur selon l'une quelconque des revendications 2 à 4 **caractérisé en ce que** l'élément conducteur primaire est fixé sur un piston (6), solidaire du tiroir (T).

6. Distributeur selon l'une quelconque des revendications précédentes **caractérisé en ce que** le boitier (1) est étanche par rapport au milieu extérieur et au flux d'air contrôlé par le distributeur pneumatique ou électropneumatique.

## Patentansprüche

1. Pneumatisches oder elektropneumatisches Wegeventil, umfassend zumindest einen Steuerungsansatz (EP) und einen Schieber (T), der sich entlang einer Achse (X) innerhalb eines Körpers (CD) des Wegeventils bewegen kann, sowie eine Vorrichtung (D) zur Detektion der Position des Schiebers, wobei die Vorrichtung (D) zwischen dem Steuerungsansatz (EP) und dem Körper (CD) entlang der Längsachse (X) angeordnet ist, und **gekennzeichnet dadurch, dass** die Detektionsvorrichtung (D) ein Gehäuse (1) umfasst, das zwischen dem Körper (CD) und dem mindestens einen Steuerungsansatz (EP) installiert werden kann, und dadurch, dass sie eine Detektionseinrichtung für die Position des Schiebers (T) mittels elektrischer Verbindung aufweist.

2. Wegeventil nach Anspruch 1, **gekennzeichnet dadurch, dass** die Detektionseinrichtung ein mit dem Schieber (T) verbundenes primäres Leitungselement (5) und zwei feste sekundäre Leitungselemente (4, 9, 10) umfasst, sodass die elektrische Verbindung dadurch erhalten wird, dass das primäre Leitungselement (5) mit den zwei sekundären Leitungselementen (4, 9, 10) in Kontakt gebracht wird.

3. Wegeventil nach Anspruch 2, **gekennzeichnet dadurch, dass** das primäre Leitungselement eine leitfähige Scheibe (5) oder eine leitfähige Lamelle ist.

4. Wegeventil nach Anspruch 2 oder 3, **gekennzeichnet dadurch, dass** die sekundären Leitungselemente (4, 9) in Form von flexiblen Leitungselementen vorgesehen sind.

5. Wegeventil nach einem der Ansprüche 2 bis 4, **gekennzeichnet dadurch, dass** das primäre Leitungselement auf einem mit dem Schieber (T) verbundenen Kolben (6) befestigt ist.

6. Wegeventil nach einem der vorhergehenden Ansprüche, **gekennzeichnet dadurch, dass** das Gehäuse (1) dicht bezüglich der Außenumgebung und der vom pneumatischen oder elektropneumatischen Wegeventil gesteuerten Luftströmung ist.

## Claims

1. Pneumatic or electropneumatic directional control valve, comprising at least one operator endpiece (EP) and a spool (T) moving along an axis (X) in a body (CD) of said directional control valve, and a device (D) for detecting the position of the spool (T), said device (D) being located between the operator endpiece (EP) and the body (CD), along said longitudinal axis (X), and **characterised in that** said device (D) for detecting comprises a module (1) able to be installed between the body (CD) and said at least one operator endpiece (EP) and **in that** it comprises means for detecting the position of the spool (T) via electrical continuity.

2. Directional control valve according to Claim 1, **characterised in that** the detecting means comprise a primary conductive element (5) securely fastened to the spool (T) and two secondary conductive elements (4, 9, 10) fixed such that electrical continuity is obtained by bringing the primary conductive element (5) into contact with the two secondary conductive elements (4, 9, 10).

3. Directional control valve according to Claim 2, **characterised in that** the primary conductive element is a conductive disc (5) or a conductive strip.

4. Directional control valve according to either of Claims 2 and 3, **characterised in that** the secondary conductive elements (4, 9) take the form of flexible conductive elements.

5. Directional control valve according to any one of Claims 2 to 4, **characterised in that** the primary conductive element is fixed to a piston (6) that is securely fastened to the spool (T).

6. Directional control valve according to any one of the preceding claims, **characterised in that** the module (1) is sealed from the external environment and from the airflow controlled by the pneumatic or electropneumatic directional control valve.
